# EUROPEAN PATENT APPLICATION

(11) **EP 4 470 365 A1**
(43) Date of publication of application: **04.12.2024**
(21) Application number: 24179249.8
(22) Date of filing: 31.05.2024
(51) Int. Cl.: A01J 5/04, G01N 1/10

(54) **SAMPLING SYSTEM FOR TESTING MILK FROM BULK TANK TRUCKS**

(30) Priority: 01.06.2023 JP 2023090610
(71) Applicant: Neturen Takuto Co., Ltd., Shizuoka 435-0028 (JP); Neturen Co., Ltd., Tokyo 141-8639 (JP)
(72) Inventor: WATANABE, Hisaaki, Hamamatsu City, Shizuoka, 435-0028 (JP)
(74) Representative: Isarpatent

(57) **Abstract**

A milk sampling system is employed, which includes a tank that stores milk, a lid provided at an upper portion of the tank, a tool to be injected into the tank to mix and sample the milk, and a robot that opens and closes the lid and injects the tool into the tank and recovers the tool from the tank in a state of the lid being opened.

## Description

### BACKGROUND

### Technical Field

The present invention relates to a milk sampling system.

### Related Art

Conventionally, a technique of collecting milk from a tank storing the milk and sampling the milk has been employed (see JP-A-H06-34428 and JP-A-2001-95407).

JP-A-H06-34428 describes that when a vehicle 11 (a tank truck shown in the figure is generally used) including a tank 10 storing milk reaches a floor 2 at a receiving location 1, a submersible pump 13 is inserted into the tank 10 through a maintenance hole 12 thereof, and mixes and samples the milk; thereafter, a hose 15 connected to a discharge port 14 of the tank 10 is inserted into a receiving port 16 of a receiving tank 3, and the milk in the tank 10 is dropped and injected into the receiving tank 3 by the weight of the milk itself (paragraph [0008]).

JP-A-2001-95407 describes that a milk collection system including a milk collection pump that sucks milk, which has been injected into a bulk cooler at each ranch, into a milk collection vehicle that stops by each ranch to collect the milk, an automatic sampler that samples the milk sucked by the milk collection pump, an air eliminator that separates bubbles of the sucked milk, a thermometer that measures the temperature of the sucked milk, a flowmeter that measures the flow rate of the sucked milk as a digital value, and a control unit that determines the recording timing of the thermometer according to the flow rate measured by the flowmeter and stores a temperature value measured by the thermometer and a cumulative flow rate value measured by the flowmeter (claim 1).

It has also been publicly known that an openable lid is provided at a tank body that stores milk having been stored in a container body of a tank transporting trailer (see JP-A-2012-131569).

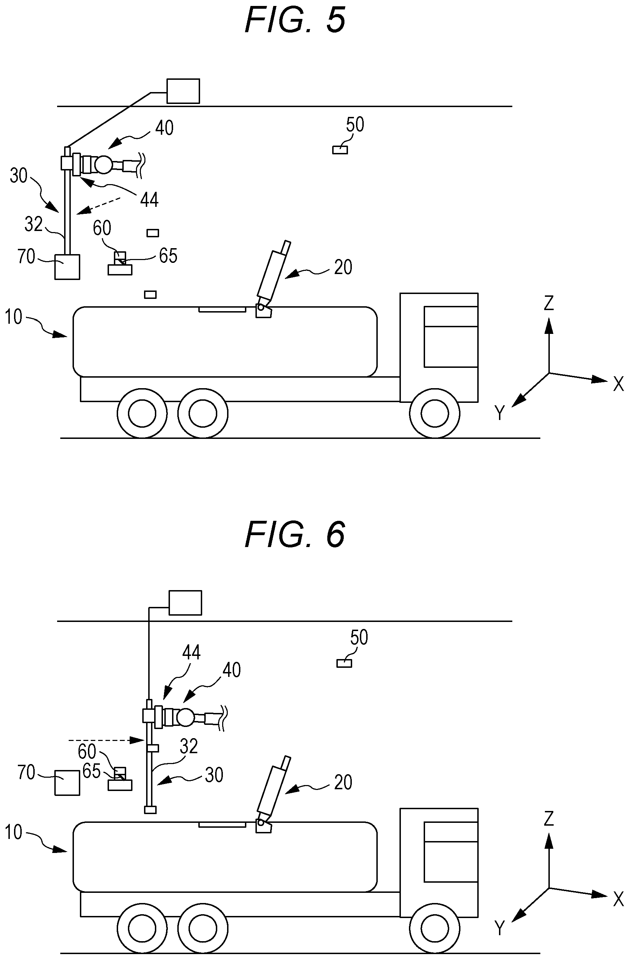

JP-A-2012-131569 describes that this tank transporting trailer has a chassis frame that travels by being towed by a tractor, and a container body 22 is fixed to the chassis frame; a tank body 21 that stores milk is housed in a refrigerating room 37 formed inside the container body 22; the refrigerating room 37 is cooled with a cooler; and an injection duct 58 is provided between an injection port 28 of the tank body 21 and an opening 57 of the container body 22, a cargo is injected into the tank body 21 in a state of a lid 27a and an injection hatch 56 being opened, and scattering of the cargo into the refrigerating room 37 is prevented by the injection duct 58 at this time ([Solution] of [Abstract]); and describes that as shown in Fig. 6, two injection hatches 56 are openably provided corresponding to injection ports 28 of maintenance holes 27 formed in the tank body 21 at a ceiling wall 36 of the container body 22; and the rectangular opening 57 opened upward from the inside of the container body 22 is formed in the injection hatch 56, and the injection hatch 56 includes a lid 56a that opens and closes the opening 57 (paragraph [0030]).

It has also been publicly known that a lid that closes an opening is opened and closed using a camera by a robot and a tool is inserted into and removed from the opening (see JP-A-H11-034818).

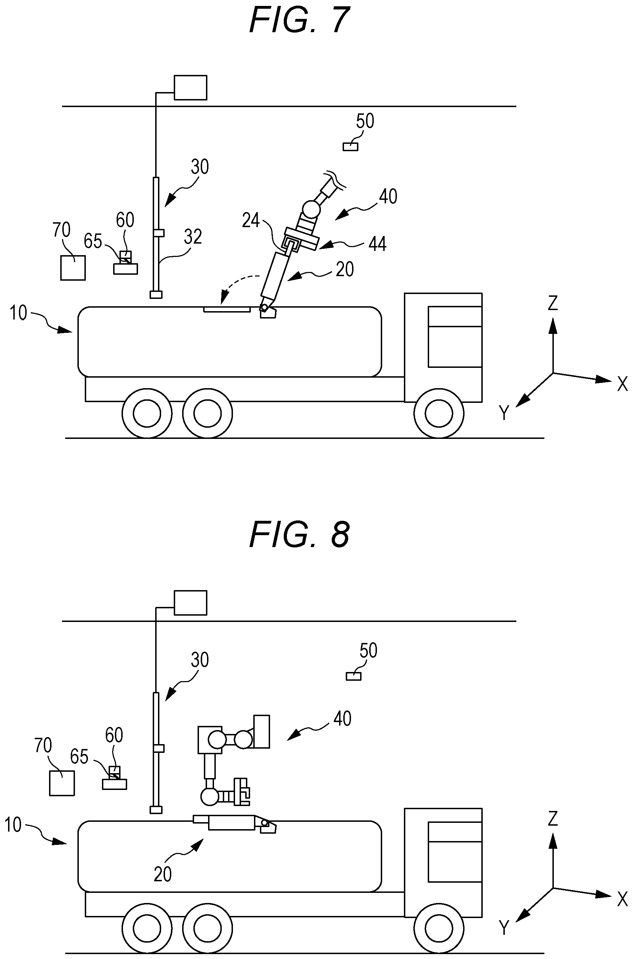

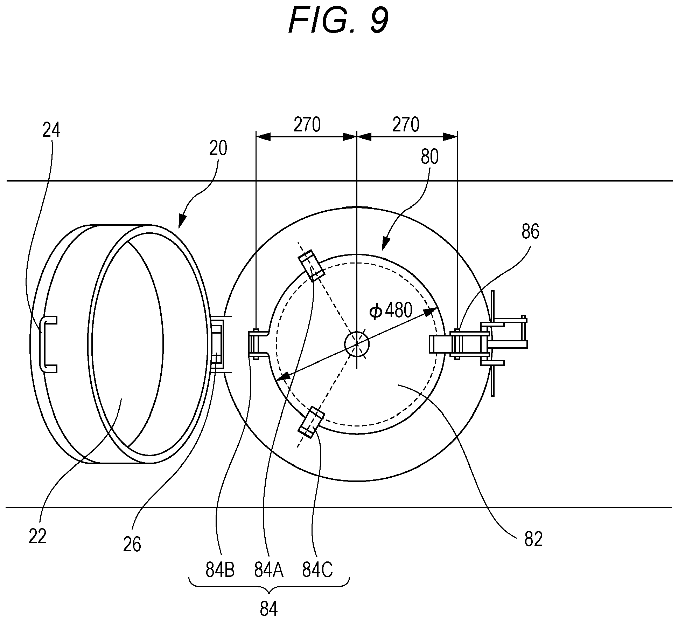

JP-A-H11-034818 describes that a monitor camera 17 as a positional relationship detection unit is provided above a reference position, and as shown in Fig. 7, a positional relationship between the outline of a vehicle X stopped at the reference position and a fuel supply robot 15 is analyzed and detected using a video image (planar video image as viewed from above as shown in Fig. 7) displayed on the monitor camera 17; and a positional relationship grasping unit 3 grasps a positional relationship between a fuel supply port Xa of the vehicle X and a tip end portion of a robot arm 22 based on unique data on the outline of the vehicle X and the position of the fuel supply port Xa from a card reader device 20 and the positional relationship between the outline of the vehicle X and the fuel supply robot 15, which has been analyzed using the video image by the monitor camera 17 (paragraph [0042]); and describes that as shown in Figs. 8 and 9, an opening/closing arm 23 that opens and closes a lid Xb that closes the fuel supply port Xa of the vehicle X is supported so as to turn about a pin axis C at the tip end portion of the robot arm 22, and a fuel supply nozzle 24 insertable into and removable from the fuel supply port Xa is provided at such a tip end portion; a lid holder 23a and a drive motor 23b (shown in Fig. 8) capable of rotating forward and backward are provided at a tip end portion of the opening/closing arm 23; and the drive motor 23b is included in the components of a fuel supply robot operation unit 4, and in a state of the lid Xa being held by the lid holder 23a, rotates the opening/closing arm 23 forward and backward about an axis n to open and close the lid Xb (paragraph [0043]).

### SUMMARY

Milk sampling described in JP-A-H06-34428 is performed by a worker, and is performed at an upper portion of the tank storing the milk (i.e., a high-place work is performed) in a state in which a lid of the maintenance hole provided at such an upper portion is opened. For this reason, safety measures need to be taken for the worker.

JP-A-2001-95407 describes a technical idea of automating milk sampling, but fails to describe that a lid of a tank is automatically opened and closed and a tool is automatically injected into the tank for sampling.

JP-A-2012-131569 describes that the openable lid is provided at the maintenance hole of the tank body that stores the milk having been stored in the container body, but fails to describe that the lid is opened and closed for sampling the milk.

JP-A-H11-034818 describes a technique of opening and closing the lid that closes the fuel supply port of the vehicle using the camera by the robot and inserting the fuel supply nozzle into the fuel supply port and removing the fuel supply nozzle from the fuel supply port, but fails to describe that this technique is applied to milk sampling.

For these reasons, the present invention is intended to provide a milk sampling system configured such that a work including opening and closing of a lid of a tank, injection of a sampling tool into the tank, and recovery of the sampling tool from the tank is automated without a work by a worker.

In order to solve the above-described problems, the present invention employs the following techniques:
(1) A milk sampling system including a tank that stores milk, a lid provided at an upper portion of the tank, a tool to be injected into the tank to mix and sample the milk, and a robot that opens and closes the lid and injects the tool into the tank and recovers the tool from the tank in a state of the lid being opened.
(2) The milk sampling system according to (1), in which the positions of the lid and the tool in supporting or releasing by an arm provided at the robot are grasped using a 3D vision camera provided above (Z-direction) the tank.
(3) The milk sampling system according to (1) or (2), in which the robot performs an operation of moving the sampled milk from a tool body to a receiving container.
(4) The milk sampling system according to (3), in which the robot performs an operation of cleaning the tool body from which the milk has been moved.

According to the present invention, the milk sampling system can be provided, which is automated without the work by the worker.

### BRIEF DESCRIPTION OF DRAWINGS

Fig. 1 is a conceptual diagram for describing a milk sampling system according to the present embodiment;
Fig. 2 is a conceptual diagram for describing operation (operation of opening a lid of a tank) of the milk sampling system according to the present embodiment;
Fig. 3 is a conceptual diagram for describing operation (operation of mixing and sampling milk by a tool) of the milk sampling system according to the present embodiment;
Fig. 4 is a conceptual diagram for describing operation (operation of moving the sampled milk from a tool body to a receiving container) of the milk sampling system according to the present embodiment;
Fig. 5 is a conceptual diagram for describing operation (operation of cleaning the tool body from which the milk has been moved) of the milk sampling system according to the present embodiment;
Fig. 6 is a conceptual diagram for describing operation (operation of moving the cleaned tool body) of the milk sampling system according to the present embodiment;
Fig. 7 is a conceptual diagram for describing operation (operation of closing the lid of the tank) of the milk sampling system according to the present embodiment;
Fig. 8 is a conceptual diagram for describing operation (operation of moving a robot to an initial position) of the milk sampling system according to the present embodiment; and
Fig. 9 is a schematic view showing one example of a lid having a double structure in which an inner lid (inner hatch) is provided inside an outer lid (outer hatch).

### DETAILED DESCRIPTION

Hereinafter, one embodiment (hereinafter referred to as a "present embodiment") of the present invention will be described with reference to the drawings.

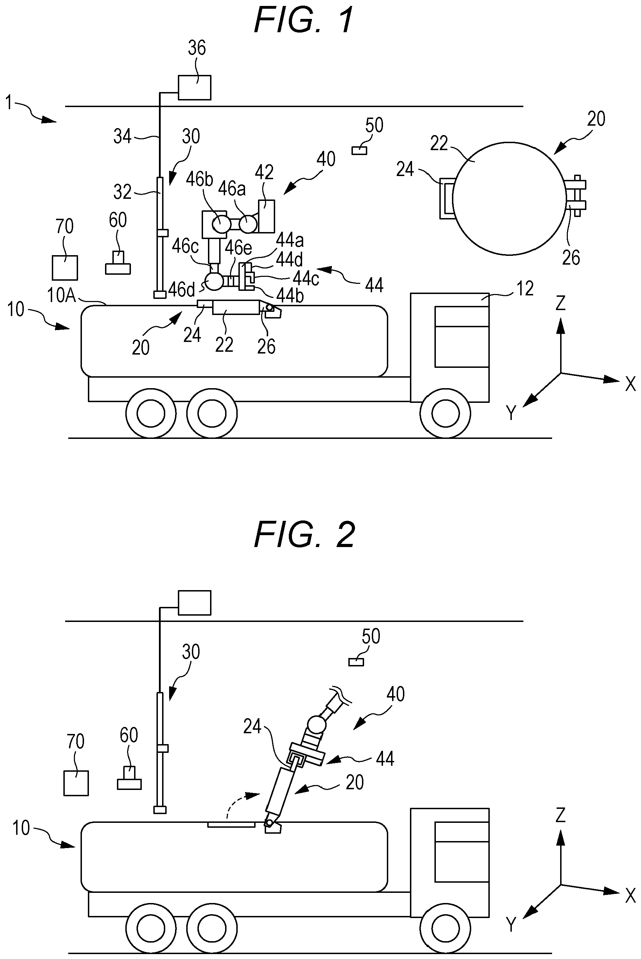

Fig. 1 is a conceptual diagram for describing a milk sampling system according to the present embodiment. Figs. 2 to 8 are conceptual diagrams for describing operation of the milk sampling system according to the present embodiment. Note that in Figs. 2 to 8, reference numerals overlapping with those in Fig. 1 and reference numerals for elements other than those in the vicinity of an arm 44 of a robot 40 are omitted and only the minimum reference numerals required for description are shown.

The milk sampling system 1 according to the present embodiment includes a tank 10 that stores milk, a lid 20 provided at an upper portion 10A of the tank 10, a tool 30 to be injected into the tank 10 to mix and sample the milk, and the robot 40 that opens and closes the lid 20 and injects the tool 30 into the tank 10 and recovers the tool 30 from the tank 10 in a state of the lid 20 being opened.

The tank 10 is transportable, for example, by a truck 12.

The lid 20 is provided at the upper portion 10A of the tank 10, and includes a lid body 22, a grip 24 coupled to the lid body 22, and a coupling 26 coupling the lid body 22 and the upper portion 10A of the tank 10 to each other such that the lid body 22 closed at the upper portion 10A of the tank 10 is openable by upward (Z-direction) lifting with the grip 24.

The tool 30 is configured such that one end of a tool body 32 formed, for example, of a tubular member is connected to an air discharger/sucker 36 via a hose 34. The other end is injected into the tank 10 and dipped in the milk, and air is discharged (supplied into the milk) from the air discharger/sucker 36. In this manner, the milk is mixed. After the milk has been mixed, the air discharger/sucker 36 is switched from air discharging to air suction, and sucks and samples the milk.

The robot 40 includes a drive controller 42, the arm 44, and coupling drivers 46a, 46b, 46c, 46d, 46e coupled between the drive controller 42 and the arm 44 and provided to move the arm 44 in the X-, Y-, and Z-directions (including positive and negative directions).

The arm 44 includes an arm body 44a, a fixing member 44b provided on the surface of the arm body 44a, a drive member 44c, and a drive mechanism 44d. The arm 44 has a configuration capable of driving, by the drive mechanism 44d, the drive member 44c toward the fixing member 44b, and therefore, supporting an object in a space surrounded by the fixing member 44b and the drive member 44c (this state will be hereinafter merely referred to as "support").

That is, the milk sampling system 1 according to the present embodiment specifically performs, by supporting or releasing a predetermined portion by the arm 44 provided at the robot 40, a work of opening and closing the lid 20 and a work of injecting the tool 30 into the tank 10 and recovering the tool 30 from the tank 10 in a state of the lid 20 being opened.

The positions of the lid 20 and the tool 30 in supporting or releasing by the arm 44 provided at the robot 40 are grasped, for example, using a 3D vision camera 50 provided above (Z-direction) the tank 10. A commercially-available camera such as a stereo type camera using a plurality of cameras, a time-of-flight (ToF) type camera including a combination of a camera and a light source, or a structured illumination type camera including a combination of a camera and a projector may be used as the 3D vision camera 50.

As described above, in the milk sampling system 1 according to the present embodiment, a work (work of opening and closing the lid 20 and work of injecting the tool 30 into the tank 10 in a state of the lid 20 being opened to mix and sample the milk in the tank 10) conventionally performed at the upper portion 10A of the tank 10 by a worker is performed by the robot 40.

Thus, milk sampling can be automated without a high-place work by the worker.

Next, a specific drive form of the milk sampling system 1 according to the present embodiment will be described with reference to Figs. 2 to 8.

First, the grip 24 of the closed lid 20 is supported between the fixing member 44b and drive member 44c of the arm 44 of the robot 40, and the lid 20 is opened by drive of the robot 40 (Fig. 2).

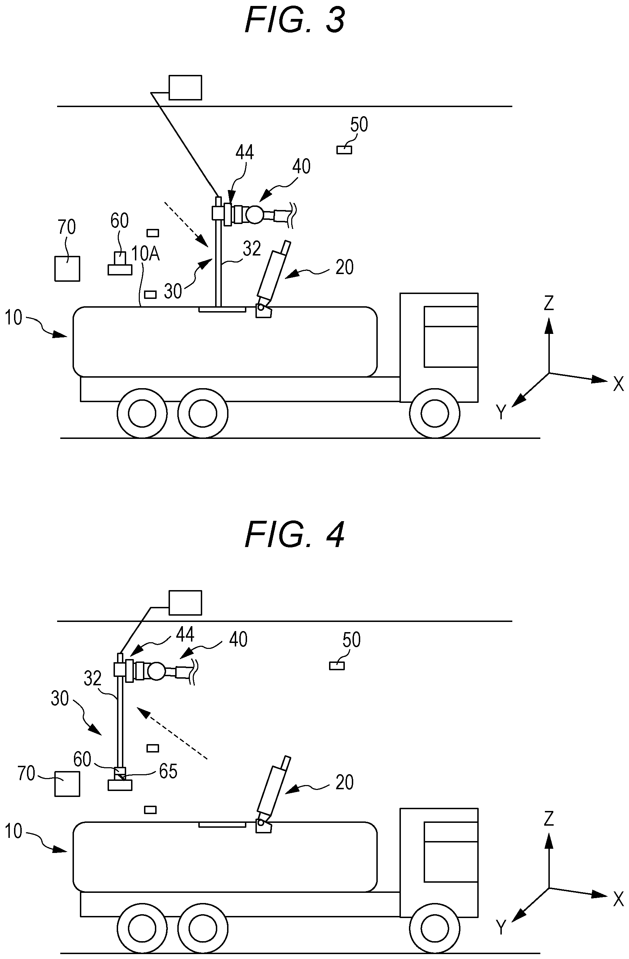

Next, in a state of the lid 20 being opened, the grip 24 is released from the arm 44, and the tool body 32 fixed with a not-shown fixing unit is supported by the arm 44. Thereafter, from such an initial position, the other end of the tool body 32 that discharges and sucks air is moved and dipped in the milk stored in the tank 10 opened at the upper portion 10A (Fig. 3). Thereafter, in the dipped state, air is discharged from the other end to mix the milk, and after mixing, the tool body 32 is switched from air discharging to air suction and sucks the milk through the dipped other end such that a certain amount of milk is held in the tool body 32. In this manner, the milk is held (sampled) in the tool body 32.

Next, while the tool body 32 holding the milk is kept supported by the arm 44, the other end of the tool body 32 is moved, by the robot 40, to above (Z-direction) a receiving container 60 held with a not-shown fixing unit. Thereafter, air is discharged to move the milk held in the tool body 32 to the receiving container 60 (Fig. 4).

With this configuration, the sampled milk 65 is held in the receiving container 60, and therefore, can be easily taken out.

Next, while the tool body 32 from which the milk has been moved is kept supported by the arm 44, the other end of the tool body 32 is moved, by the robot 40, to above (Z-direction) a cleaning container 70 held with a not-shown fixing unit. Thereafter, the other end is moved downward (negative Z-direction), and in this manner, the other end (preferably, the entirety of the portion, which includes the other end, of the tool body 32 dipped in the milk) is injected into the cleaning container 70 and is cleaned with, e.g., pure water (Fig. 5).

Next, while the cleaned tool body 32 is kept supported by the arm 44, the tool body 32 is moved to and held at, by the robot 40, the initial position at which the tool body 32 is held with the not-shown fixing unit (Fig. 6).

Thereafter, the tool body 32 held with the not-shown fixing unit is released from the arm 44, and then, the grip 24 of the opened lid 20 is supported again and the lid 20 is closed in such a supported state by the robot 40 (Fig. 7).

Finally, as necessary, the robot 40 is moved to an initial position at which the robot 40 is held with a not-shown fixing unit, and then, milk sampling is completed (Fig. 8). Note that the receiving container 60 held with the not-shown fixing unit and storing the moved milk is recovered by the worker.

In the above-described present embodiment (see Figs. 1 to 8), the tank 10 having only the lid 20 as a lid has been described, but as shown in Fig. 9, the above-described present embodiment can also accommodate a lid having a double structure in which an inner lid (inner hatch) 80 is provided inside an outer lid (outer hatch) 20. The inner lid 80 includes an inner lid body 82, a plurality of hooks 84 (in the shown case, 84A, 84B, 84C) provided at the inner lid body 82, and a coupling 86 coupling the inner lid body 82 and the upper portion 10A of the tank 10 to each other. The hooks 84 (84A, 84B, 84C) are hooked and retained on the upper portion 10A of the tank 10, and in this manner, the inner lid 80 can be closed. The hooks 84A, 84B, 84C are unhooked and the inner lid body 82 is lifted upward (Z-direction), and in this manner, the inner lid 80 can be opened.

When performing a work of opening and closing the outer lid 20 and the inner lid 80, the positions of the outer lid 20 and the inner lid 80 in supporting or releasing by the arm 44 provided at the robot 40 are particularly preferably grasped using the 3D vision camera 50.

First, the positions of the outer lid 20 and the grip 24 are grasped using the 3D vision camera 50, the grip 24 of the closed lid 20 is supported between the fixing member 44b and drive member 44c of the arm 44 of the robot 40, and the outer lid body 22 is lifted upward (Z-direction). In this manner, the outer lid 20 is opened. Next, the positions of the inner lid 80 and the plurality of hooks 84 (84A, 84B, 84C) are grasped using the 3D vision camera 50, the hooks 84A, 84B, 84C are sequentially unhooked with gripped between the fixing member 44b and drive member 44c of the arm 44 of the robot 40, and the inner lid body 82 is lifted upward (Z-direction) with any of the unhooked hooks is supported. In this manner, the inner lid 80 is opened. When performing a work by the robot 40, it is effective to employ the 3D vision camera 50 to grasp the positions of the above-described plurality of hooks 84 of the inner lid 80.

After the outer lid 20 and the inner lid 80 have been opened, the milk is mixed and sampled with the tool as in Fig. 3, an operation of moving the sampled milk from the tool body to the receiving container is performed as in Fig. 4, the tool body from which the milk has been moved is cleaned as in Fig. 5, and the cleaned tool body is moved as in Fig. 6. Thereafter, the hooks 84 of the opened inner lid 80 are supported, and the inner lid 80 is closed in such a supported state by the robot 40. Then, the hooks 84 are retained at the upper portion 10A of the tank 10. Thereafter, an operation of closing the outer lid 20 is performed as in Fig. 7.

## Claims

1. A milk sampling system comprising:
a tank that stores milk;
a lid provided at an upper portion of the tank;
a tool to be injected into the tank to mix and sample the milk; and
a robot that opens and closes the lid and injects the tool into the tank and recovers the tool from the tank in a state of the lid being opened.

2. The milk sampling system according to claim 1, wherein
positions of the lid and the tool in supporting or releasing by an arm provided at the robot are grasped using a 3D vision camera provided above (Z-direction) the tank.

3. The milk sampling system according to claim 1, wherein
the robot performs an operation of moving the sampled milk from a tool body to a receiving container.

4. The milk sampling system according to claim 3, wherein
the robot performs an operation of cleaning the tool body from which the milk has been moved.
